# EUROPÄISCHE PATENTSCHRIFT

(11) **EP 1 935 702 B1**
(45) Veröffentlichungstag und Bekanntmachung des Hinweises auf die Patenterteilung: **01.07.2009**
(21) Anmeldenummer: 07024176.5
(22) Anmeldetag: 13.12.2007
(51) Int. Cl.: B60K 15/04, B60K 15/05, E05B 47/00

(54) **Tankklappenmodul**
Fuel flap module
Module de trappe de réservoir de carburant

(30) Priorität: 20.12.2006 DE 102006061218
(43) Veröffentlichungstag der Anmeldung: 25.06.2008
(73) Patentinhaber: GM Global Technology Operations, Inc., Detroit MI 48265-3 (US)
(72) Erfinder: Zentner, Christian, 65187 Wiesbaden (DE); Lederer, Lars, 91541 Rothenburg (DE)
(74) Vertreter: Strauss, Peter

(56) Entgegenhaltungen:
- EP-A- 1 557 313
- EP-A- 1 571 029
- DE-A1- 4 242 228
- US-A- 5 044 678

## Beschreibung

Die vorliegende Erfindung betrifft ein Tankklappenmodul zum Einbau in ein Kraftfahrzeug mit einem Muldenkörper und einem an dem Muldenkörper befestigten, zur Aufnahme einer Tankklappe ausgebildeten Scharnierarm, der an dem Muldenkörper um eine Schwenkachse verschwenkbar gelagert ist und an seinem von der Schwenkachse abgewandeten Ende einen Verriegelungsabschnitt aufweist, sowie mit einem Verriegelungselement, das zum Ver- und Entriegeln der Tankklappe durch eine Steuereinheit zwischen einer Verriegelungsposition, in der das Verriegelungselement in den Verriegelungsabschnitt eingreift, und einer Freigabeposition, in der das Verriegelungselement nicht in den Verriegelungsabschnitt eingreift, umstellbar ist.

Ein Tankklappenmodul dieser Art ist beispielsweise aus der EP 0 736 406 A1 bekannt. Bei diesem Tankklappenmodul ist zum Verriegeln der Tankklappe die als Stellmotor ausgebildete Steuereinheit getrennt von dem Tankklappenmodul ausgebildet und auf der Verriegelungsseite des Tankklappenmoduls am Fahrzeugaufbau befestigt. Mittels des Stellmotors kann eine sich von dem Stellmotor zum Verriegelungsabschnitt hin erstreckende Verriegelungsstange hin- und herbewegt werden, wodurch eine Ver- und Entriegelung der Tankklappe erfolgt. Nachteilig an dieser bekannten Anordnung ist der relativ große Aufwand bei der Endmontage, da der Stellmotor mit Verriegelungsstange und das eigentliche Tankklappenmodul in getrennten Arbeitsschritten separat montiert werden müssen. Zum anderen besitzt diese bekannte Anordnung aufgrund der getrennten Ausbildung von Stellmotor und Tankklappenmodul einen relativ großen Platzbedarf.

Ein Tankklapenmodul, welches die Merkmale des Oberbegriffs des Anspruchs 1 zeigt, ist aus der US 5 044 678 bekannt.

Es ist eine Aufgabe der vorliegenden Erfindung, ein Tankklappenmodul der eingangs genannten Art so auszubilden, dass sowohl der Platzbedarf als auch der Aufwand bei der Endmontage verringert werden kann.

Ausgehend von einem Tankklappenmodul der eingangs genannten Art wird diese Aufgabe erfindungsgemäß dadurch gelöst, dass die Steuereinheit an der Außenseite des Muldenkörpers im Bereich der Schwenkachse angeordnet ist und dass das Verriegelungselement den Muldenkörper bereichsweise umgreift.

Durch die Anordnung der Steuereinheit im Bereich der Schwenkachse an der Außenseite des Muldenkörpers wird eine sehr kompakte Bauweise und damit ein sehr geringer Platzbedarf erreicht. Entgegen der üblichen Anordnung der Steuereinheit auf der Verriegelungsseite des Tankklappenmoduls wird erfindungsgemäß somit die Steuereinheit auf der von der Verriegelungsseite abgewandten Seite des Tankklappenmoduls angeordnet, um eine kompaktere Bauweise des Tankklappenmoduls zu erreichen. Gleichzeitig wird durch das den Muldenkörper umgreifende Verriegelungselement jedoch gewährleistet, dass trotz dieser ungewöhnlichen Positionierung des Steuerelements ein Verriegeln der Tankklappe an der von der Schwenkachse abgewandten Seite möglich ist. Dadurch wird eine stabilere Verriegelung erreicht als sie bei einer schwenkachsenseitig vorgesehenen Verriegelung möglich wäre.

Nach einer vorteilhaften Ausführungsform der Erfindung ist die Steuereinheit bei eingebautem Tankmodul oberhalb oder unterhalb des Scharnierarms angeordnet. In diesen Bereichen ist üblicherweise ausreichend Freiraum vorhanden, wobei gleichzeitig der Abstand zwischen der Steuereinheit und dem Verriegelungsabschnitt und damit die Länge des Verriegelungselements minimiert wird.

Bevorzugt umfasst der Muldenkörper eine seitlich überstehende Gehäuseerweiterung, in der die Schwenkachse des Scharnierarms angeordnet ist. Das Steuerelement kann dabei vorteilhaft an der Außenseite der Gehäuseerweiterung, insbesondere an seiner Ober- oder Unterseite, angeordnet sein. Durch das Anbringen des Steuerelements an der seitlichen Gehäuseerweiterung weist das Tankklappenmodul somit lediglich an einer Seite überstehende Elemente auf. Dadurch ist gewährleistet, dass zum Einsetzen des Tankklappenmoduls in eine üblicherweise der Außenkontur der Tankklappe entsprechende Öffnung in der Fahrzeugkarosserie das Tankklappenmodul zunächst mit dem überstehenden Bereich in die entsprechende Öffnung eingeführt werden kann um anschließend durch entsprechendes Verkippen des Tankklappenmoduls in der Karosserieöffnung festgelegt, beispielsweise verrastet zu werden. Durch die Kombination von Steuerelement und Gehäuseerweiterung ist somit ein problemloser Einbau des Tankklappenmoduls von außen durch die Karosserieöffnung möglich.

Nach einer weiteren vorteilhaften Ausführungsform der Erfindung weist der Muldenkörper eine Öffnung zum Durchgreifen des Verriegelungselements auf, wobei bei geschlossener Tankklappe der Verriegelungsabschnitt benachbart zu der Öffnung angeordnet ist. Diese Öffnung kann dabei bevorzugt als Führung für das Verriegelungselement ausgebildet sein. Trotz der entfernten Positionierung der das Verriegelungselement bewegenden Steuereinheit wird durch diese Führungsöffnung somit eine exakte Führung des Verriegelungselements insbesondere im Bereich seines mit dem Verriegelungsabschnitt zusammenwirkenden Teils gewährleistet. Grundsätzlich können auch noch an weiteren Stellen des Muldenkörpers Führungselemente für das den Muldenkörper umgreifende Verriegelungselement vorgesehen sein.

Nach einer weiteren bevorzugten Ausführungsform der Erfindung ist das Verriegelungselement hakenförmig, insbesondere J-förmig ausgebildet. Durch die hakenförmige Ausbildung kann das Verriegelungselement sehr platzsparend an die Außenkontur des Muldenkörpers angepasst werden. Insbesondere kann das Verriegelungselement einen an der Steuereinheit eingreifenden, langgestreckten Basisabschnitt, einen sich daran anschließenden gegenüber dem Basisabschnitt schräg bzw. quer verlaufenden Mittelabschnitt und einen sich daran anschließenden, zum Eingreifen in den Verriegelungsabschnitt ausgebildeten Endabschnitt umfassen. Bevorzugt kann der Endabschnitt des Verriegelungselements im Wesentlichen parallel und insbesondere entgegengesetzt zu dem Basisabschnitt verlaufen. Dadurch ist gewährleistet, dass bei einer axialen Verschiebung des Verriegelungselements durch die Steuereinheit auch der Endabschnitt eine entsprechend parallel versetzte, axiale Verschiebung durchführt und somit durch die Führungsöffnung im Muldenkörper hindurch in den Verriegelungsabschnitt hinein- oder aus diesem herausgeschoben wird.

Nach einer weiteren vorteilhaften Ausführungsform der Erfindung sind der Basisabschnitt und der Endabschnitt bei eingebautem Tankklappenmodul im Wesentlichen horizontal angeordnet. Eine axiale Verschiebung des Verriegelungselements entspricht damit ebenfalls einer im Wesentlichen horizontalen Verschiebung. Dementsprechend kann auch das Steuerelement so angeordnet sein, dass die Bewegungsachse des Steuerelements ebenfalls horizontal angeordnet ist, wodurch die gewünschte kompakte Bauweise des Tankklappenmoduls erreicht wird.

Bevorzugt sind der Basisabschnitt und der Endabschnitt bei eingebautem Tankklappenmodul in vertikaler und horizontaler Richtung versetzt zueinander angeordnet. Der Mittelabschnitt kann dabei bogenförmig oder schräg zur geschlossenen Tankklappe verlaufend ausgebildet sein, so dass eine platzsparende, an die Außenkontur des Muldenkörpers angepasste Ausbildung des Verriegelungselements erreicht wird.

Vorteilhaft verläuft die Bewegungsrichtung des Verriegelungselements im Wesentlichen senkrecht zur Schwenkachse. Bei entsprechend ausgebildetem Scharnierarm ist somit das Verriegelungselement durch die Steuereinheit in einer im Wesentlichen entlang einer Längsachse des Scharnierarms verlaufenden Richtung bewegbar. Dadurch wird erreicht, dass das Verriegelungselement einerseits möglichst kurz ausgebildet und gleichzeitig platzsparend angeordnet ist.

Nach einer weiteren vorteilhaften Ausführungsform der Erfindung ist die Steuereinheit als Teil des vormontierten Tankklappenmoduls ausgebildet. Insbesondere kann das Steuerelement an dem Muldenkörper lösbar befestigt, insbesondere aufgesteckt, aufgeschoben, verschraubt oder verrastet werden. Grundsätzlich ist es auch möglich, dass das Steuerelement mit dem Muldenkörper unlösbar verbunden, beispielsweise verklebt oder eingegossen ist. Durch die lösbare oder unlösbare integrale Ausbildung des Steuerelements mit dem Muldenkörper wird nicht nur der Platzbedarf verringert, sondern auch die Endmontage deutlich vereinfacht. Das vormontierte Tankklappenmodul kann in einem einzigen Arbeitsschritt in eine entsprechende Öffnung in der Karosserie eingesetzt und mit dieser verbunden, beispielsweise verrastet, verschraubt oder in einer sonstigen Weise an der Karosserie festgelegt werden.

Nach einer weiteren bevorzugten Ausführungsform der Erfindung ist die Steuereinheit als Stellmotor oder als Elektromagnet ausgebildet. Grundsätzlich ist jede Steuereinheit denkbar, durch die das Verriegelungselement mit einer in axialer Richtung wirkenden Kraft beaufschlagt werden kann. Grundsätzlich ist es aber auch möglich, dass das Verriegelungselement nicht in Längsrichtung verschoben, sondern beispielsweise um eine Längsachse, insbesondere um seinen Basisabschnitt, verdreht wird, wodurch das in dem Verriegelungsabschnitt eingreifende Ende des Verriegelungselements aus dem Verriegelungsabschnitt heraus und wieder in diesen zurückbewegt werden kann. Insofern ist auch die Verwendung von Steuerelementen denkbar, mit denen eine Drehbewegung auf das Verriegelungselement übertragbar ist.

Nach einer weiteren bevorzugten Ausführungsform der Erfindung ist die Tankklappe an dem Scharnierarm befestigt, insbesondere aufgesteckt, aufgeschoben, verklebt, verschraubt oder verrastet. Auf diese Weise kann die Tankklappe beispielsweise farblich an die Farbe der Karosserie angepasst werden, ohne dass jeweils das gesamte Tankklappenmodul bzw. der Scharnierarm entsprechend ausgebildet sein muss. Grundsätzlich ist es jedoch auch möglich, dass die Tankklappe einstückig mit dem Scharnierarm ausgebildet ist.

Weitere vorteilhafte Ausführungsformen sind in den Unteransprüchen angegeben.

Die Erfindung wird nachfolgend anhand eines Ausführungsbeispiels unter Bezugnahme auf die Zeichnung näher beschrieben; in dieser zeigen:
- Fig. 1: eine perspektivische Darstellung eines erfindungsgemäßen ausgebildeten Tankklappenmoduls,
- Fig. 2: eine Rückansicht des Tankklappenmoduls nach Fig. 1,
- Fig. 3: eine teilweise aufgerissene Draufsicht auf das Tankklappenmodul nach Fig. 1, und
- Fig. 4: eine Seitenansicht des Tankklappenmoduls nach Fig. 1.

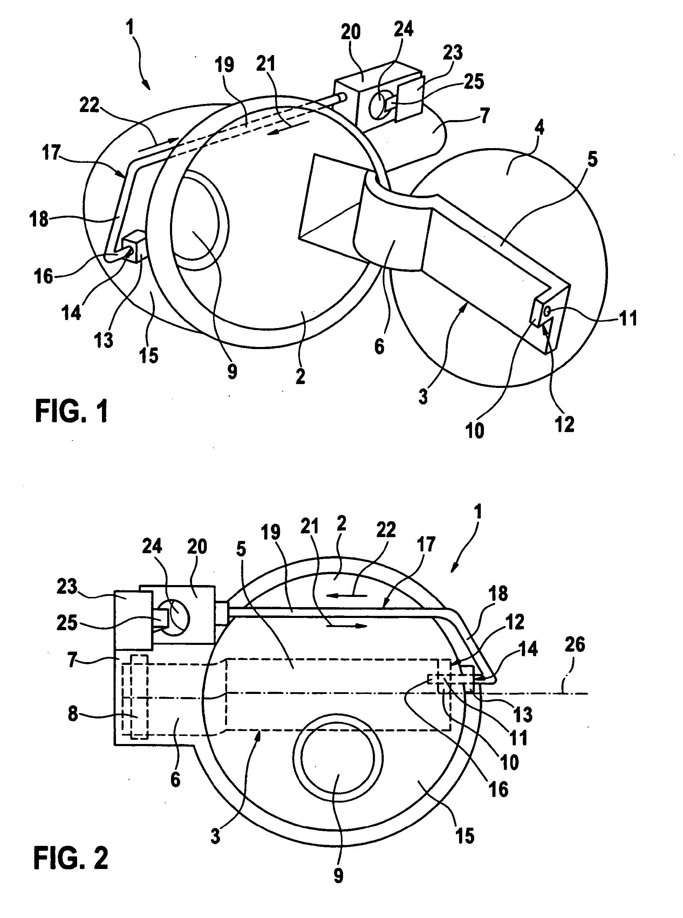

Fig. 1 zeigt ein Tankklappenmodul 1, das einen Muldenkörper 2, und einen verschwenkbar an dem Muldenkörper 2 gelagerten Scharnierarm 3 umfasst, an dem eine Tankklappe 4 befestigt ist.

Der Scharnierarm 3 umfasst einen länglichen Abschnitt 5, der zum Aufnahmen der Tankklappe 4 ausgebildet ist, sowie einen sich daran anschließenden bogenförmigen Abschnitt 6, der in eine seitlich des Muldenkörpers 2 ausgebildete Gehäuseerweiterung 7 hineinragt und in dieser um eine Schwenkachse 8 (Fig. 2) verschwenkbar gelagert ist.

Im rückwärtigen Bereich des Muldenkörpers 2 ist eine Öffnung 9 vorgesehen, die zur Aufnahme eines nicht dargestellten Tankeinfüllstutzens dient.

Im Bereich des freien Endes des Scharnierarms 3 ist ein Ansatz 10 mit einer Bohrung 11 ausgebildet, die zusammen einen Verriegelungsabschnitt 12 bilden.

Etwa gegenüber der Gehäuseerweiterung 7 ist an dem Muldenkörper 2 ein Führungselement 13 mit einer Führungsöffnung 14 vorgesehen, welche die Wand 15 des Muldenkörpers 2 durchdringt und in der ein als Verriegelungszapfen ausgebildeter Endabschnitt 16 eines hakenförmigen Verriegelungselements 17 geführt ist. Das Führungselement 13 mit der Führungsöffnung 14 ist dabei so positioniert, dass beim Schließen der Tankklappe 4 die Führungsöffnung 14 mit der Bohrung 11 des Verriegelungsabschnitts 12 fluchtet, so dass bei Verschieben des hakenförmigen Verriegelungselements 17 in einer Richtung gemäß einem Pfeil 22 der als Verriegelungszapfen ausgebildete Endabschnitt 16 des Verriegelungselements 17 in die Bohrung 11 des Verriegelungsabschnitts 12 eingreift und dadurch die Tankklappe 4 verriegelt. In diesem Zustand befindet sich das Verriegelungselement 17 in seiner Verriegelungsposition.

An den Endabschnitt 16 des Verriegelungselements 17 schließt sich ein Mittelabschnitt 18 und daran ein Basisabschnitt 19 des Verriegelungselements 17 an, der mit einem an der Oberseite der Gehäuseerweiterung 7 angeordneten Steuerelement 20 in Wirkverbindung steht. Durch das Steuerelement 20, das beispielsweise als Stellmotor oder als Elektromagnet ausgebildet sein kann, kann das Verriegelungselement 17 in axialer Richtung, das heißt entlang des Pfeils 22 zum Steuerelement 20 hin sowie entlang eines Pfeils 22 vom Steuerelement 20 weg bewegt werden.

Während, wie bereits beschrieben, bei einer Bewegung in Richtung des Pfeils 22 der als Verriegelungszapfen ausgebildete Endabschnitt 16 des Verriegelungselements 17 bei geschlossener Tankklappe 4 in die Bohrung 11 eingreift und sich somit in seiner Verriegelungsstellung befindet, wird bei einem Verschieben in entgegengesetzter Richtung gemäß dem Pfeil 21 der Endabschnitt 16 des Verriegelungselements 17 aus der Bohrung 11 des Verriegelungsabschnitts 12 herausbewegt und in seine Freigabeposition verbracht. In dieser kann die Tankklappe 4 geöffnet werden.

An der Oberseite der Gehäuseerweiterung 7 ist ein Rastelement 23 ausgebildet, das mit der Gehäuseerweiterung 7 fest verbunden ist und in das das Steuerelement 20 zur Befestigung mit dem Tankklappenmodul 1 einsetzbar ist. Dazu sind an den Seitenwänden des Steuerelements 20 Rastausnehmungen 24 ausgebildet, die mit an dem Rastelement 23 ausgebildeten Rastnasen 25 zum Halten des Steuerelements 20 zusammenwirken.

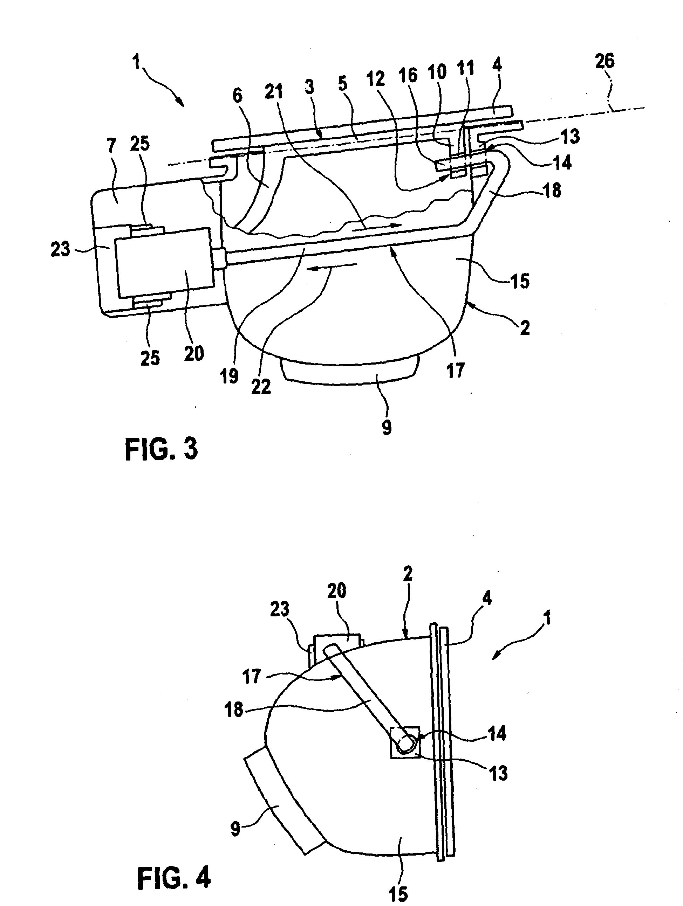

Während der Muldenkörper 2 sowie der Scharnierarm 3 beispielsweise aus Kunststoff hergestellt sind, ist das Verriegelungselement 17 bevorzugt aus Metall ausgebildet. Wie es in den Figuren zu erkennen ist, umgreift das Verriegelungselement 17 aufgrund seiner hakenförmigen Ausbildung den Muldenkörper 2 in seinem rückwärtig gelegenen oberen Bereich, wobei aufgrund der hakenförmigen Ausbildung gewährleistet ist, dass eine Verschiebung des Basisabschnitts 9 des Verriegelungselements 17 in eine dazu entsprechende Verschiebung des Endabschnitts 16 umgesetzt wird. Der als Verriegelungszapfen ausgebildete Endabschnitt 16 kann somit ungehindert in der Führungsöffnung 14 im Wesentlichen parallel zu einer Längsachse 26 des länglichen Abschnitts 5 des Scharnierarms 3 (siehe Fig. 2 und 3) hin und her bewegt werden.

Aus den Fig. 2 bis 4 ist weiter zu erkennen, dass sich der Mittelabschnitt 18 des Verriegelungselements 17 von dem im Wesentlichen horizontal verlaufenden Basisabschnitt 19 schräg nach vorne unten und gleichzeitig nach vorne außen zum Endabschnitt 16 erstreckt, der wiederum im Wesentlichen horizontal durch die Führungsöffnung 14 in das Innere des Muldenkörpers 2 hineinragt. Durch diese den Muldenkörper 2 in Teilbereichen umgreifende Ausbildung des Verriegelungselements 17 ist es möglich, dass das Steuerelement 20 platzsparend an der Ober- oder der Unterseite der Gehäuseerweiterung 7 vormontiert werden kann, während gleichzeitig ein Verriegeln der Tankklappe 4 im Bereich ihres von der Schwenkachse 8 abgewandten Endes möglich ist. Dabei wird durch die umgreifende Ausgestaltung des Verriegelungselements 17 die Außenabmessung des Tankklappenmoduls 1 kaum vergrößert.

Die kompakte Bauweise des erfindungsgemäßen Tankklappenmoduls 1 wird darüber hinaus durch liegende Anordnung des Steuerelements 20, bei der die interne Stellwelle des Steuerelements 20 horizontal angeordnet ist, an der Ober- bzw. Unterseite der Gehäuseerweiterung 7 begünstigt, da üblicherweise die Gehäuseerweiterung 7 zur Aufnahme des bogenförmigen Abschnitts 6 des Scharnierarms 3 sowie der Schwenkachse 8 eine entsprechende längliche Ausgestaltung besitzt.

Das erfindungsgemäß ausgebildete Tankklappenmodul 1 kann zusammen mit dem Steuerelement 20 und dem Verriegelungselement 17 als vormontierte Baugruppe hergestellt werden, wobei durch die Anordnung des Steuerelements 20 unmittelbar an der Gehäuseerweiterung 7 gewährleistet ist, dass sich das Tankklappenmodul 1 ohne weiteres von außen durch eine entsprechende Aufnahmeöffnung in der Karosserie einsetzen lässt. Da die Gehäuseerweiterung 7 zusammen mit dem Steuerelement 20 an einer Seite des Tankklappenmoduls 1 angeordnet sind, kann zunächst diese seitlich überstehende Einheit bei schräggestelltem Tankklappenmodul 1 in die Aufnahmeöffnung eingeführt werden und anschließend durch Verkippen des Tankklappenmoduls 1 diese überstehende Einheit seitlich neben der Aufnahmeöffnung hinter dem Karosserieblech positioniert werden. Dadurch kann der Muldenkörper 2 vollständig in die Aufnahmeöffnung eingeschoben und darin befestigt, beispielsweise verrastet werden.

Der gesamte Einbau des Tankklappenmoduls 1 kann somit in einem einzigen Verfahrensschritt erfolgen. Es ist lediglich erforderlich, vor Einsetzen des Tankklappenmoduls 1 das Steuerelement 20 mit üblicherweise in der Aufnahmeöffnung vorbereitet angeordneten elektrischen Anschlusskabeln zu verbinden. Nach Anschluss und Einbau des Tankklappenmoduls 1 kann dieses über das Steuerelement 20, beispielsweise angesteuert durch die Zentralverriegelung eines Fahrzeugs, ver- bzw. entriegelt werden.

### Bezugszeichenliste

- 1: Tankklappenmodul
- 2: Muldenkörper
- 3: Scharnierarm
- 4: Tankklappe
- 5: länglicher Abschnitt des Scharnierarms
- 6: bogenförmiger Abschnitt des Scharnierarms
- 7: Gehäuseerweiterung
- 8: Schwenkachse
- 9: Öffnung
- 10: Ansatz
- 11: Bohrung
- 12: Verriegelungsabschnitt
- 13: Führungselement
- 14: Führungsöffnung
- 15: Wand
- 16: Endabschnitt des Verriegelungselements
- 17: Verriegelungselement
- 18: Mittelabschnitt des Verriegelungselements
- 19: Basisabschnitt des Verriegelungselements
- 20: Steuerelement
- 21: Pfeil
- 22: Pfeil
- 23: Rastelement
- 24: Rastausnehmungen
- 25: Rastnasen
- 26: Längsachse des Scharnierarms

## Patentansprüche

1. Tankklappenmodul zum Einbau in ein Kraftfahrzeug mit einem Muldenkörper (2) und einem an dem Muldenkörper (2) befestigten, zur Aufnahme einer Tankklappe (4) ausgebildeten Scharnierarm (3), der an dem Muldenkörper (2) um eine Schwenkachse (8) verschwenkbar gelagert ist und an seinem von der Schwenkachse (8) abgewandten Ende einen Verriegelungsabschnitt (12) aufweist, sowie mit einem Verriegelungselement (17), das zum Ver- und Entriegeln der Tankklappe (4) durch eine Steuereinheit (20) zwischen einer Verriegelungsposition, in der das Verriegelungselement (17) in den Verriegelungsabschnitt eingreift, und einer Freigabeposition, in der das Verriegelungselement (17) nicht in den Verriegelungsabschnitt (12) eingreift, umstellbar ist, wobei
die Steuereinheit (20) an der Außenseite des Muldenkörpers (2) angebracht ist, **dadurch gekennzeichnet, dass** die Steuereinheit (20) im Bereich der Schwenkachse (8) angeordnet ist und dass das Verriegelungselement (17) den Muldenkörper (2) bereichsweise umgreift.

2. Tankklappenmodul nach Anspruch 1,
**dadurch gekennzeichnet,**
**dass** die Steuereinheit (20) bei eingebautem Tankklappenmodul (1) oberhalb oder unterhalb des Scharnierarms (3) angeordnet ist.

3. Tankklappenmodul nach Anspruch 1 oder 2,
**dadurch gekennzeichnet ,**
**dass** der Muldenkörper (2) eine seitlich überstehende Gehäuseerweiterung (7) umfasst, in der die Schwenkachse (8) des Scharnierarms (3) angeordnet ist.

4. Tankklappenmodul nach Anspruch 3,
**dadurch gekennzeichnet,**
**dass** das Steuerelement (20) an der Außenseite der Gehäuseerweiterung (7) angeordnet ist.

5. Tankklappenmodul nach einem der vorhergehenden Ansprüche,
**dadurch gekennzeichnet ,**
**dass** der Muldenkörper (2) eine Öffnung (14) zum Durchgreifen des Verriegelungselements (17) aufweist und dass bei geschlossener Tankklappe (4) der Verriegelungsabschnitt (12) benachbart zu der Öffnung (14) angeordnet ist.

6. Tankklappenmodul nach Anspruch 5,
**dadurch gekennzeichnet ,**
**dass** die Öffnung (14) als Führung für das Verriegelungselement (17) ausgebildet ist.

7. Tankklappenmodul nach einem der vorhergehenden Ansprüche,
**dadurch gekennzeichnet ,**
**dass** das Verriegelungselement (17) hakenförmig, insbesondere J-förmig ausgebildet ist.

8. Tankklappenmodul nach einem der vorhergehenden Ansprüche,
**dadurch gekennzeichnet ,**
**dass** das Verriegelungselement (17) einen an der Steuereinheit (20) angreifenden, lang gestreckten Basisabschnitt (19), einen sich daran anschließenden, gegenüber dem Basisabschnitt (19) schräg bzw. quer verlaufenden Mittelabschnitt (18) sowie einen sich daran anschließenden, zum Eingreifen in den Verriegelungsabschnitt (12) ausgebildeten Endabschnitt (16) umfasst.

9. Tankklappenmodul nach Anspruch 8,
**dadurch gekennzeichnet ,**
**dass** der Endabschnitt (16) des Verriegelungselements (17) im Wesentlichen parallel und insbesondere entgegengesetzt zu dem Basisabschnitt (19) verläuft.

10. Tankklappenmodul nach Anspruch 8 oder 9,
**dadurch gekennzeichnet ,**
**dass** der Basisabschnitt (19) und der Endabschnitt (16) bei eingebautem Tankklappenmodul (1) im Wesentlichen horizontal angeordnet sind.

11. Tankklappenmodul nach einem der Ansprüche 8 bis 10,
**dadurch gekennzeichnet ,**
**dass** der Basisabschnitt (19) und der Endabschnitt (16) bei eingebautem Tankklappenmodul (1) in vertikaler und horizontaler Richtung versetzt zueinander angeordnet sind.

12. Tankklappenmodul nach einem der vorhergehenden Ansprüche,
**dadurch gekennzeichnet ,**
**dass** die Bewegungsrichtung (21, 22) des Verriegelungselements (17) im Wesentlichen senkrecht zur Schwenkachse (8) verläuft.

13. Tankklappenmodul nach einem der vorhergehenden Ansprüche,
**dadurch gekennzeichnet ,**
**dass** das Verriegelungselement (17) durch die Steuereinheit (20) in einer im Wesentlichen entlang einer Längsachse (26) des Scharnierarms (3) verlaufenden Richtung (21, 22) bewegbar ist.

14. Tankklappenmodul nach einem der vorhergehenden Ansprüche,
**dadurch gekennzeichnet ,**
**dass** die Steuereinheit (20) als Teil des vormontierten Tankklappenmoduls (1) ausgebildet ist.

15. Tankklappenmodul nach einem der vorhergehenden Ansprüche,
**dadurch gekennzeichnet ,**
**dass** das Steuerelement (20) an dem Muldenkörper (2) lösbar befestigt, insbesondere aufgesteckt, aufgeschoben, verschraubt oder verrastet ist.

16. Tankklappenmodul nach einem der vorhergehenden Ansprüche,
**dadurch gekennzeichnet ,**
**dass** die Steuereinheit (20) als Stellmotor oder als Elektromagnet ausgebildet ist.

17. Tankklappenmodul nach einem der vorhergehenden Ansprüche,
**dadurch gekennzeichnet ,**
**dass** die Tankklappe (4) an dem Scharnierarm (3) befestigt, insbesondere aufgesteckt, aufgeschoben, verklebt, verschraubt oder verrastet ist.

18. Tankklappenmodul nach einem der vorhergehenden Ansprüche,
**dadurch gekennzeichnet ,**
**dass** die Tankklappe (4) einstückig mit dem Scharnierarm (3) ausgebildet ist.

## Claims

1. A tank cap module for installation in a motor vehicle, comprising a recess body (2) and an articulated arm (3) which is fixed to the recess body (2), arranged for receiving a tank cap (4), is held on the recess body (2) to be swivelable about a swivel pin (8) and comprises a locking section (12) at its end averted from the swivel pin (8), and a locking element (17) which can be changed over for locking and unlocking the tank cap (4) by a control unit (20) between a locking position in which the locking element (17) engages in the locking section and a release position in which the locking element (17) does not engage in the locking section (12), with the control unit (20) being attached to the outside of the recess body (2), **characterized in that** the control unit (20) is arranged in the region of the swivel pin (8) and the locking element (17) overlaps the recess body (2) in sections.

2. A tank cap module according to claim 1, **characterized in that** the control unit (20) is arranged above or beneath the articulated arm (3) when the tank cap module (1) is built in.

3. A tank cap module according to claim 1 or 2, **characterized in that** the recess body (2) comprises a laterally protruding housing extension (7) in which the swivel pin (8) of the articulated arm (3) is arranged.

4. A tank cap module according to claim 3, **characterized in that** the control element (20) is arranged on the outside of the housing extension (7).

5. A tank cap module according to one of the preceding claims, **characterized in that** the recess body (2) comprises an opening (14) for allowing the penetration of the locking element (17) and the locking section (12) is arranged adjacent to the opening (14) when the tank cap (4) is closed.

6. A tank cap module according to claim 5, **characterized in that** the opening (14) is arranged as a guide means for the locking element (17).

7. A tank cap module according to one of the preceding claims, **characterized in that** the locking element (17) is arranged in the form of a hook, especially J-shaped.

8. A tank cap module according to one of the preceding claims, **characterized in that** the locking element (17) comprises a longitudinally extending base section (19) which acts upon the control unit (20), an adjacent middle section (18) which extends in an oblique or transversal manner relative to the base section (19), and an adjacent end section (16) which is arranged for engaging in the locking section (12).

9. A tank cap module according to claim 8, **characterized in that** the end section (16) of the locking element (17) extends substantially parallel and especially in the opposite direction to the base section (19).

10. A tank cap module according to claim 8 or 9, **characterized in that** the base section (19) and the end section (16) are arranged substantially horizontally when the tank cap module (1) is installed.

11. A tank cap module according to one of the claims 8 to 10, **characterized in that** the base section (19) and the end section (16) are arranged offset with respect to each other in the vertical and horizontal direction when the tank cap module (1) is installed.

12. A tank cap module according to one of the preceding claims, **characterized in that** the direction of movement (21, 22) of the locking element (17) extends substantially perpendicular to the swivel pin (8).

13. A tank cap module according to one of the preceding claims, **characterized in that** the locking element (17) can be moved by the control unit (20) in a direction (21, 22) extending substantially along a longitudinal axis (26) of the swivel pin (8).

14. A tank cap module according to one of the preceding claims, **characterized in that** the control unit (20) is arranged as a part of the pre-assembled tank cap module (1).

15. A tank cap module according to one of the preceding claims, **characterized in that** the control element (20) is detachably fastened to the recess body (2), especially inserted, slid on, screwed or latched together.

16. A tank cap module according to one of the preceding claims, **characterized in that** the control unit (20) is arranged as a servomotor or as an electromagnet.

17. A tank cap module according to one of the preceding claims, **characterized in that** the tank cap (4) is fastened to the articulated arm (3), especially inserted, slid on, glued, screwed or latched together.

18. A tank cap module according to one of the preceding claims, **characterized in that** the tank cap (4) is arranged integrally with the articulated arm (3).

## Revendications

1. Module de clapet de réservoir destiné à être monté dans un véhicule à moteur avec un corps en auge (2) et un bras de charnière (3) fixé au corps en auge (2) et conçu pour recevoir un clapet de réservoir (4), qui est supporté sur le corps en auge (2) de façon à pouvoir pivoter autour d'un axe de pivotement (8) et présente à son extrémité opposée à l'axe de pivotement (8) une section de verrouillage (12), et avec un élément de verrouillage (17) qui peut être déplacé par une unité de commande (20) pour verrouiller et déverrouiller le clapet de réservoir (4) entre une position de verrouillage dans laquelle l'élément de verrouillage (17) se met en prise dans la section de verrouillage et une position de déverrouillage dans laquelle l'élément de verrouillage (17) ne se met pas en prise dans la section de verrouillage (12), l'unité de commande (20) étant disposée sur la face extérieure du corps en auge (2), **caractérisé en ce que** l'unité de commande (20) est disposée au niveau de l'axe de pivotement (8) et **en ce que** l'élément de verrouillage (17) entoure partiellement le corps en auge (2).

2. Module de clapet de réservoir selon la revendication 1, **caractérisé en ce que** l'unité de commande (20) est disposée, quand le module de clapet de réservoir (1) est installé, au-dessus ou en dessous du bras de charnière (3).

3. Module de clapet de réservoir selon la revendication 1 ou 2, **caractérisé en ce que** le corps en auge (2) présente un élargissement du boîtier (7) faisant saillie latéralement, dans lequel est disposé l'axe de pivotement (8) du bras de charnière (3).

4. Module de clapet de réservoir selon la revendication 3, **caractérisé en ce que** l'élément de commande (20) est disposé sur la face extérieure de l'élargissement du boîtier (7).

5. Module de clapet de réservoir selon l'une des revendications précédentes, **caractérisé en ce que** le corps en auge (2) présente une ouverture (14) pour le passage de l'élément de verrouillage (17) et **en ce que** lorsque le clapet de réservoir (4) est fermé, la section de verrouillage (12) est disposée au voisinage de l'ouverture (14).

6. Module de clapet de réservoir selon la revendication 5, **caractérisé en ce que** l'ouverture (14) est conformée comme un guide pour l'élément de verrouillage (17).

7. Module de clapet de réservoir selon l'une des revendications précédentes, **caractérisé en ce que** l'élément de verrouillage (17) est en forme de crochet, et en particulier en forme de J.

8. Module de clapet de réservoir selon l'une des revendications précédentes, **caractérisé en ce que** l'élément de verrouillage (17) comprend une section de base (19) allongée se mettant en prise sur l'unité de commande (20), une section médiane (18) lui faisant suite et inclinée ou oblique par rapport à la section de base (19) et une section d'extrémité (16) lui faisant suite, conçue pour se mettre en prise dans la section de verrouillage (12).

9. Module de clapet de réservoir selon la revendication 8, **caractérisé en ce que** la section d'extrémité (16) de l'élément de verrouillage (17) est sensiblement parallèle et en particulier opposée à la section de base (19).

10. Module de clapet de réservoir selon la revendication 8 ou 9, **caractérisé en ce que** la section de base (19) et la section d'extrémité (16) sont disposées sensiblement à l'horizontale quand le module de clapet de réservoir (1) est monté en place.

11. Module de clapet de réservoir selon l'une des revendications 8 à 10, **caractérisé en ce que** la section de base (19) et la section d'extrémité (16) sont décalées l'une par rapport à l'autre dans le sens vertical et horizontal quand le module de clapet de réservoir (1) est monté en place.

12. Module de clapet de réservoir selon l'une des revendications précédentes, **caractérisé en ce que** le sens de déplacement (21, 22) de l'élément de verrouillage (17) est sensiblement perpendiculaire à l'axe de pivotement (8).

13. Module de clapet de réservoir selon l'une des revendications précédentes, **caractérisé en ce que** l'élément de verrouillage (17) peut être déplacé par l'unité de commande (20) dans une direction (21, 22) suivant sensiblement un axe longitudinal (26) du bras de charnière (3).

14. Module de clapet de réservoir selon l'une des revendications précédentes, **caractérisé en ce que** l'unité de commande (20) est conformée comme une partie du module de clapet de réservoir (1) pré-assemblé.

15. Module de clapet de réservoir selon l'une des revendications précédentes, **caractérisé en ce que** l'élément de commande (20) est fixé de manière amovible sur le corps en auge (2), en particulier emboîté, enfilé, vissé ou encliqueté.

16. Module de clapet de réservoir selon l'une des revendications précédentes, **caractérisé en ce que** l'unité de commande (20) est conformée comme un moteur de réglage ou un électroaimant.

17. Module de clapet de réservoir selon l'une des revendications précédentes, **caractérisé en ce que** le clapet de réservoir (4) est fixé sur le bras de charnière (3), en particulier emboîté, enfilé, collé, vissé ou encliqueté.

18. Module de clapet de réservoir selon l'une des revendications précédentes, **caractérisé en ce que** le clapet de réservoir (4) est construit d'un seul tenant avec le bras de charnière (3).
